# EUROPEAN PATENT SPECIFICATION

(11) **EP 0 965 514 B1**
(45) Date of publication and mention of the grant of the patent: **20.03.2002**
(21) Application number: 99201633.7
(22) Date of filing: 21.05.1999
(51) Int. Cl.: B62D 1/06

(54) **Motor vehicle steering wheel cover**
Kraftfahrzeug- Lenkradumhüllung
Couvercle pour volant de direction de véhicule automobile

(30) Priority: 19.06.1998 IT BO980380
(43) Date of publication of application: 22.12.1999
(73) Proprietor: Simoni Racing S.p.A., 44043 Mirabello (FE) (IT)
(72) Inventor: Simoni, Filippo, 44043 Mirabello (FE) (IT)
(74) Representative: Checcacci, Giorgio

(56) References cited:
- DE-A- 4 129 664
- DE-U- 8 708 663

## Description

The present invention relates to a steering wheel cover device for motorvehicles. More particularly, the present invention relates to a motorvehicle steering wheel cover device comprising a flexible band with joined ends suitable to cover the steering wheel of a motorvehicle having at least one spoke, and such steering wheel covered by said steering wheel cover device.

Steering wheel cover devices for improving the grip, the aesthetic properties and/or the quality of the material of a steering wheel are known.

Such devices are generally made up of a flexible band, with joined ends, having shape and size such as to cover the rim of the steering wheel and not the spokes. In this way these devices can be applied to any steering wheel regardless of its size and of the shape, the number and the size of its spokes.

The band of these devices is generally made of natural or synthetic leather and is fastened to the steering wheel using adhesive means or by joining its edges. In the latter case the edges typically have small holes through which a joining cord is passed.

However, the inventors of the present invention perceived that these devices have disadvantages as far as the aesthetic level and the grip of the steering wheel are concerned.

In fact such devices cause material and/or color contrasts in the steering wheels on which they are applied that can result aesthetically displeasing.

Furthermore, in correspondence with the edges of the band, they cause some undesirable discontinuity on the surface of the steering wheel which not only ruins the aesthetic properties of the steering wheel but makes the grip thereof uncomfortable as well.

Additionally, in the case of devices in which the band is fixed to the steering wheel with a joining cord, the edges of the band, that cannot be joined in correspondence with the spokes, do not adhere well to the surface of the steering wheel and thus form wrinkles that worsen the aesthetic properties and the quality of the grip of the steering wheel. These wrinkles are important especially in modern steering wheels wherein the spokes tend to be bigger and bigger and it is therefore more difficult for the edges of the device's band to get around them.

DE 41 29 664 discloses a cover material for a steering wheel of a vehicle comprising a strip-like material having a plurality of protruding portions for covering in part the spokes of the steering wheel. The protruding portions have a trapezoidal shape with a tapered portion distanced from the strip-like material.

JP 62 185 680 discloses a steering wheel cover device comprising a flexible band having a first and a second edge and a plurality of flexible portions which protrude from the first edge and have a shape suitable to cover at least in part the spokes of the steering wheel. The flexible portions have curved shape with a central area integral with the band and two opposite facing wings distanced from the band.

JP 10 250 588 discloses a cover for steering wheel comprising band form sheets sewn up to form in a circular form and projections integral with the band form sheets to be wound on the spokes of the steering wheel.

The inventors of the present invention aimed at overcoming the above mentioned drawbacks.

Furthermore, the inventors of the present invention aimed at providing a steering wheel cover device with a typically sporting aspect.

It is therefore a first aspect of the present invention to provide a steering wheel cover device for motorvehicles comprising a flexible band having joined ends, said band having a first and a second edge, being suitable to cover the rim of a steering wheel that has at least one spoke and comprising at least one flexible portion which protrudes from said first edge and has a predetermined shape suitable to cover at least in part said at least one spoke characterized in that it further comprises at least one insert suitable to be inserted between said band and the rim of said steering wheel so as to create a protrusion on the covered steering wheel.

The steering wheel cover device according to the invention, covering at least in part also the spokes of a steering wheel, enables to achieve a steering wheel with a more uniform aspect and surface and, thus, to improve, in comparison to conventional devices, both the aesthetic properties and the grip thereof. Furthermore, the insert allows to provide the steering wheel cover device with a typically sporting aspect.

Preferably, said protruding portion has a curved shape with a central area integral with said band and two opposite facing wings distanced from said band. This shape enables to optimize the covering of the spoke while not introducing undesirable discontinuities onto the front surface of the steering wheel.

The dimension and the bend of the flexible protruding portion are advantageously selected depending on the characteristics of the steering wheel, and more particularly, according to the shape and the dimension of its spokes.

Advantageously, said two wings have closing means suitable to close upon itself, around said at least one spoke, said at least one protruding portion. A typical example of said closing means consists of press studs. In alternative, Velcro™.

These closing means advantageously facilitate the application of the device to the steering wheel. Furthermore, when the band is correctly applied to the steering wheel, they are hidden behind the back part of the steering wheel and do not ruin its aesthetic qualities.

When the steering wheel has more than one spoke, the device of the invention comprises a plurality of flexible portions, one to cover at least in part each spoke.

In this case, all of the flexible portions protrude, advantageously, from the same edge of the band so as to guarantee that all of the closing means of the various flexible portions can be hidden behind the back part of the steering wheel.

Advantageously, said first and second edges of said band are predisposed to be joined by a joining seam. This joining seam enables the device to adhere well to the steering wheel and is aesthetically pleasing.

Typically, said first and said second edges of said band have trimming seams suitable to provide stitches around which the joining seam is passed. This enables to facilitate the joining seam of the two edges when the device is applied to the steering wheel.

Preferably, said insert has a lenticular shape and is made of an elastomeric material. This enables the insert to better conform to the curved surface of the rim of. the steering wheel on which it is put.

More preferably, said first and said second edges of said band comprise a widening suitable to cover said insert when said edges are joined by said joining seam. In this way, a better aesthetic result is achieved and an excessive tension on the joining seam caused by the insert is avoided.

Furthermore, said band can advantageously comprise a plurality of sections whose characteristics are different from each other. For example, the various sections can be of different colors and/or can be made of different materials or of materials treated in different ways. For example, in correspondence with the two lateral parts of the steering wheel, the band can comprise sections of perforated leather which allows for better transpiration of the driver's hands while he is holding the steering wheel.

Advantageously, the band comprises means that facilitate the fastening to the surface of the steering wheel. These means enable the device to better adhere to the steering wheel and avoid it slipping on the surface thereof.

Typically, said fastening means are made up of double adhesive tape.

It is a second aspect of the present invention to provide a motorvehicle steering wheel covered with a steering wheel cover device that has the characteristics already described above with regard to the steering wheel cover device of the invention.

Features and advantages of the invention will now be illustrated with reference to embodiments represented by examples, but not limited to, in the following drawings wherein
- Fig. 1 shows a first embodiment of a steering wheel cover device of the invention applied to a steering wheel;
- Fig. 2 shows a second embodiment of a steering wheel cover device of the invention during its application to the steering wheel of Figure 1;
- Fig. 3 shows a view, according to the A arrow of Fig. 2, of the second embodiment of the steering wheel cover device;
- Fig. 4 shows a sectional view according to line IV -IV of Fig. 2 and 3;
- Fig. 5 shows a view similar to that of Fig. 3 of an alternative embodiment of the steering wheel cover device of the invention;
- Fig. 6 shows a sectional view according to line VI - VI of Fig. 5;
- Fig. 7 shows a developed plan of the band of the steering wheel cover device of Fig. 2.

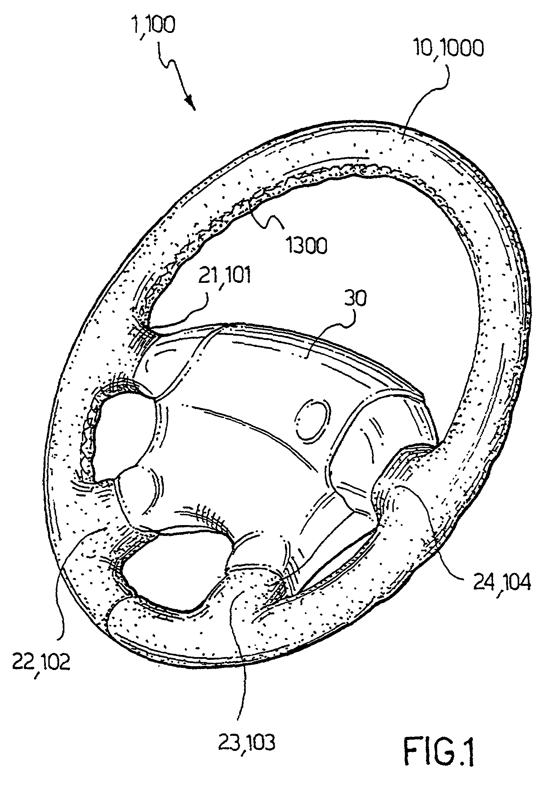

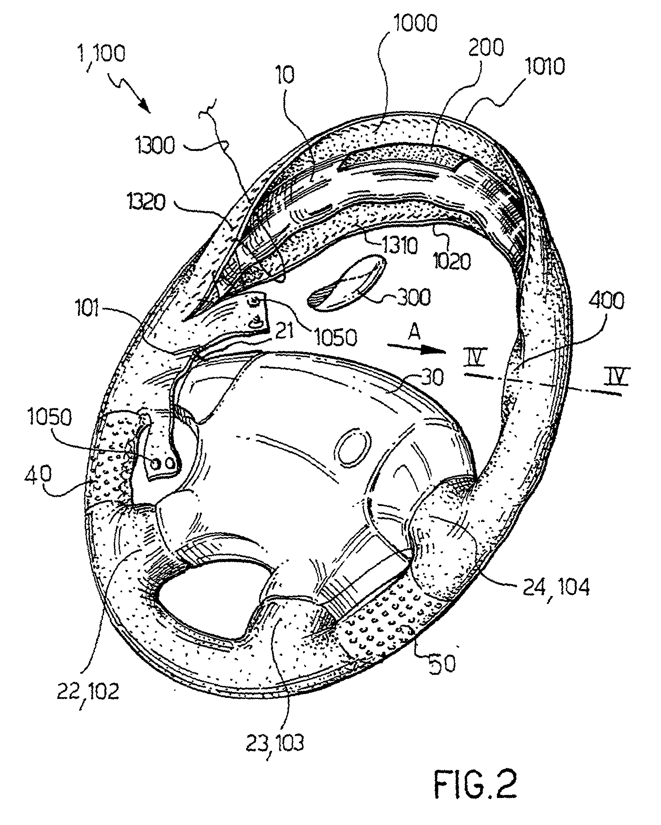

Figures 1 and 2 show two embodiments of a steering wheel cover device 100 according to the invention for a steering wheel 1 having a rim 10, a central body 30 and four spokes 21, 22, 23, 24.

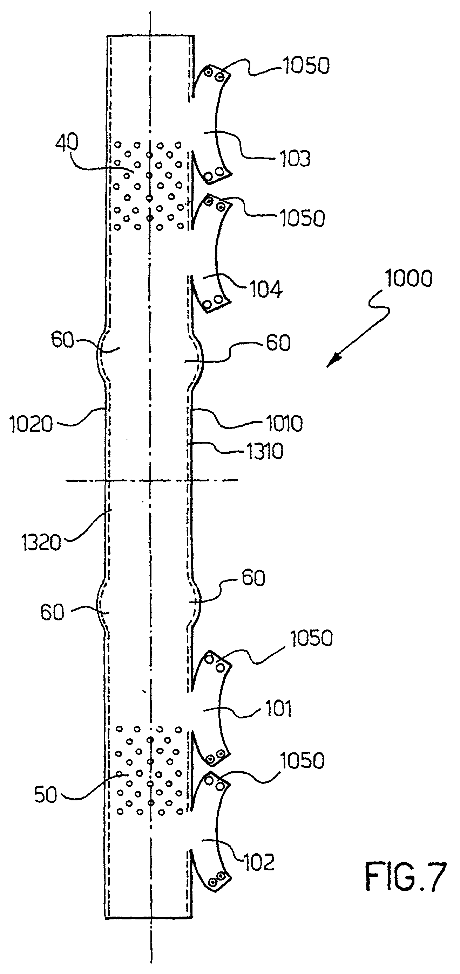

The steering wheel cover device 100 comprises a flexible band 1000 with joined ends having a first 1010 and a second 1020 edge and four flexible portions 101, 102, 103, 104, one for each of the spokes 21 - 24 of the steering wheel 1, that protrude from the edge 1010 (Figure 7).

The flexible portions 101, 102, 103, 104 have a shape suitable to cover at least in part the spokes 21 - 24. More particularly, as shown in Fig. 2 and 7, they have a curved shape with a central area integral with the band 1000 and two opposite facing wings distanced from the band.

The bending radius, the length and the width of the wings and of the central area are selected according to the type of steering wheel to cover and according to the dimension of its spokes.

Advantageously, the ends of the two wings have closing means 1050 for closing upon themselves the protruding portions 101- 104, around the spokes 21 - 24.

In the embodiment shown in Fig. 2 and 7, said closing means 1050 consist of press studs.

Since the flexible portions 101 - 104 protrude from the same edge 1010 of the band 1000, the closing means are all situated at the back part of the steering wheel and therefore do not ruin its aesthetic qualities.

When the steering wheel cover device 100 is applied to the steering wheel 1, the edges 1010, 1020 are joined by a joining seam 1300. To facilitate the joining of the edges, they preferably have trimming seams 1320, 1320 which supply stitches around which the joining seam 1300 is passed. That is, the joining seam 1300 is advantageously carried out by passing a suitable thread around the stitches provided by the trimming seams 1310, 1320.

The flexible band 1000 is typically made of natural or synthetic leather.

In the embodiment of Fig. 1, the band 1000 is made entirely of smooth leather while in the embodiment of Fig. 2 and 7 it comprises two sections 40 and 50 of perforated leather.

Furthermore, according to other variations not shown, the band may also comprise sections of colored leather or a combination of sections of colored and perforated leather.

Compared to the embodiment of Fig. 1, the embodiment of Fig. 2 of the steering wheel cover device 100, further comprises double adhesive tapes 200 which enable to improve the adherence of the band 1000 to the surface of the steering wheel 1.

Furthermore, in the embodiment of Fig. 2, the steering wheel cover device 100 further comprises two inserts 300 and 400 suitable to form two protrusions on the rim 10 of the covered steering wheel 1 and to give it a typically sporting aspect.

In Fig. 2, both the protrusion created by the insert 400 that has already been inserted between the band 1000 and the surface of the rim 10 and the insert 300 that has not been inserted yet can be seen.

So as to facilitate the fitting of the inserts 300 and 400 to the curved surface of the rim 10, they advantageously have a lenticular shape and are preferably made of elastomeric material.

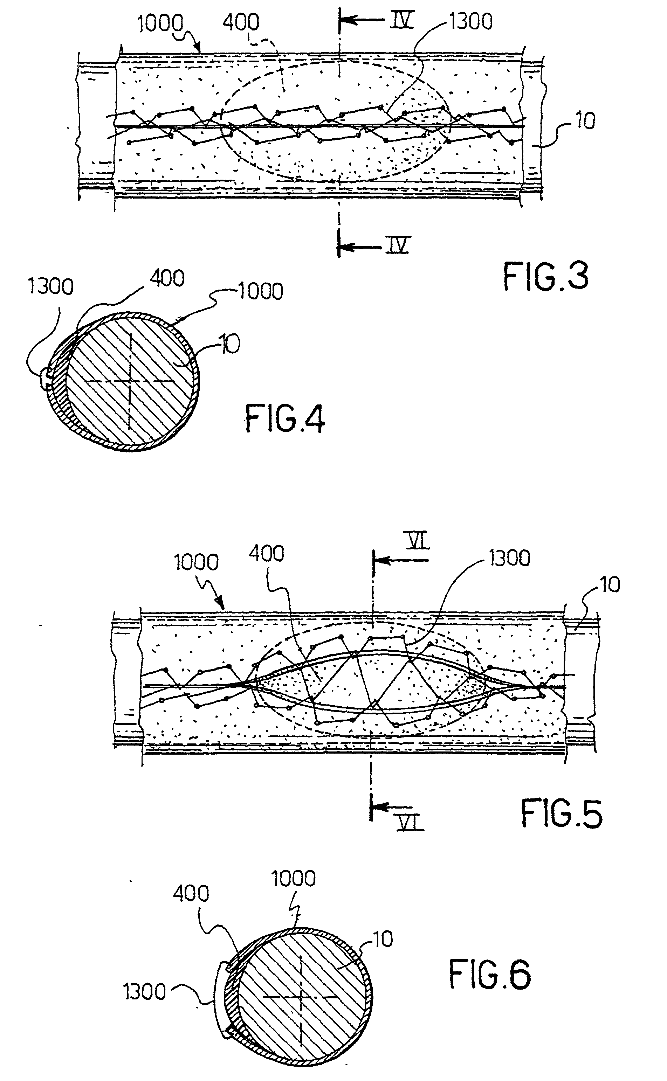

In the embodiment of Fig. 2 and 7, in correspondence with the predefined points where the inserts 300, 400 have to be inserted, the band 1000 has widenings, marked as a whole with the number 60, whose shape and dimensions are preselected so as to cover the inserts 300 and 400 when the edges 1010, 1020 are joined by the joining seam 1300. In this way, all along the internal perimeter of the rim 10, the joining seam 1300 is uniform and is not exposed to excessive tensions (Figures 3 and 4).

On the contrary, said widenings of the band are not present - as shown in Fig. 5 and 6 - in the case in which one wishes to leave the choice of where to position the inserts along the rim of the steering wheel to the driver.

According to other embodiments not shown, the steering wheel cover device of the invention may further comprise a combination of components different from that shown in Fig. 2.

For example, it may comprise one or more than two inserts (inserted in positions different than those shown in Fig. 2 as well), one or more than two sections of perforated leather, one or more sections of colored leather and/or fastening means 200 other than double adhesive tape of Fig. 2.

As seen in Fig. 1 and 2, the steering wheel cover device of the invention enables to obtain a steering wheel with a pleasant aspect and a surface that is substantially smooth and uninterrupted thus improving the aesthetic property and the grip thereof compared to a steering wheel covered with a conventional device.

## Claims

1. Steering wheel cover device (100) for motorvehicles comprising a flexible band (1000) having joined ends, said band (1000) having a first (1010) and a second (1020) edge, being suitable to cover the rim (10) of a steering wheel (1) that has at least one spoke (21; 22; 23; 24) and comprising at least one flexible portion (101; 102; 103; 104) which protrudes from said first edge (1010) and has a predetermined shape suitable to cover at least in part said at least one spoke (21; 22; 23; 24) **characterized in that** it further comprises at least one insert (300; 400) suitable to be inserted between said band (1000) and the rim (10) of said steering wheel (1) so as to create a protrusion on the covered steering wheel (1).

2. Steering wheel cover device (100) according to claim 1, wherein said at least one protruding portion (101; 102; 103; 104) has a curved shape with a central area integral with said band (1000) and two opposite facing wings distanced from said band (1000).

3. Steering wheel cover device (100) according to claim 2, wherein said two wings have closing means (1050) suitable to close said at least one protruding portion (101; 102; 103; 104) upon itself, around said at least one spoke (21; 22; 23; 24).

4. Steering wheel cover device (100) according to any of claims 1 to 3, wherein said first and said second edges (1010, 1020) of said band (1000) are predisposed to be joined by a joining seam (1300).

5. Steering wheel cover device (100) according to claim 4, wherein said first and said second edges (1010, 1020) of said band (1000) have trimming seams (1310, 1320) suitable to provide stitches around which said joining seam (1300) is passed.

6. Steering wheel cover device (100) according to any of claims 1 to 5, wherein said insert (300; 400) has a lenticular shape and is made of an elastomeric material.

7. Steering wheel cover device (100) according to claim 4 or 5, wherein said first and said second edges (1010, 1020) of said band (1000) comprise a widening (60) suitable to cover said insert (300; 400) when said edges (1010, 1020) are joined by said joining seam (1300).

8. Steering wheel cover device (100) according to any of the previous claims from 1 to 7, wherein said band (1000) comprises a plurality of sections (40, 50) having different characteristics from each other.

9. Steering wheel cover device (100) according to any of the previous claims from 1 to 8, wherein the band (1000) comprises means (200) to facilitate the fastening to the surface of said steering wheel (1).

10. Steering wheel (1) for motorvehicles covered with a steering wheel cover device (100) according to any of the previous claims from 1 to 9.

## Patentansprüche

1. Lenkradbezug (100) für Motorfahrzeuge, umfassend ein flexibles Band (1000), dessen Enden miteinander verbunden sind, wobei das Band (1000) einen ersten Rand (1010) und einen zweiten Rand (1020) aufweist, geeignet ist, den Radkranz (10) eines Lenkrads (1), das mindestens eine Speiche (21;22;23;24) hat, zu bedekken und mindestens einen flexiblen Teilabschnitt (101;102;103;104) aufweist, der von dem ersten Rand (1010) absteht und eine vorbestimmte Form aufweist, so daß er geeignet ist, mindestens einen Teil der mindestens einen Speiche (21;22;23;24) zu bedecken, **dadurch gekennzeichnet, daß** er außerdem mindestens ein Einsatzteil (300;400) aufweist, das geeignet ist, zwischen dem Band (1000) und dem Radkranz (10) des Lenkrads (1) eingesetzt zu werden, so daß es eine Verdickung an dem bezogenen Lenkrad (1) erzeugt.

2. Lenkradbezug (100) nach Anspruch 1, bei welchem der mindestens eine abstehende Teilabschnitt (101;102; 103;104) eine gebogene Form hat mit einem zentralen Bereich, der mit dem Band (1000) integral verbunden ist, und mit zwei einander gegenüberliegenden Flügelteilen, die von dem Band (1000) beabstandet sind.

3. Lenkradbezug (100) nach Anspruch 2, bei welchem die beiden Flügelteile Schließmittel (1050) aufweisen, die geeignet sind, den mindestens einen abstehenden Teilabschnitt (101;102;103;104) um die mindestens eine Speiche (21;22;23;24) herum mit sich selbst zu verbinden.

4. Lenkradbezug (100) nach einem der Ansprüche 1 bis 3, bei welchem der erste Rand (1010) und der zweite Rand (1020) des Bandes (1000) dazu vorbereitet sind, mittels einer Verbindungsnaht (1300) miteinander verbunden zu werden.

5. Lenkradbezug (100) nach Anspruch 4, bei welchem der erste Rand (1010) und der zweite Rand (1020) des Bandes (1000) Montagenähte (1310,1320) aufweisen, die so ausgebildet sind, daß sie Fadenabschnitte zur Verfügung stellen, um welche herum die Verbindungsnaht (1300) verläuft.

6. Lenkradbezug (100) nach einem der Ansprüche 1 bis 5, bei welchem das Einsatzteil (300;400) eine linsenförmige Form hat und aus einem elastomeren Material hergestellt ist.

7. Lenkradbezug (100) nach Anspruch 4 oder 5, bei welchem der erste Rand (1010) und der zweite Rand (1020) des Bandes (1000) eine Verbreiterung (60) aufweisen, die so ausgebildet ist, daß sie das Einsatzteil (300;400) bedeckt, wenn die Ränder (1010,1020) mittels der Verbindungsnaht (1300) verbunden werden.

8. Lenkradbezug (100) nach einem der vorausgehenden Ansprüche 1 bis 7, bei welchem das Band (1000) eine Mehrzahl von Abschnitten (40,50) aufweist, die voneinander verschiedene charakteristische Eigenschaften haben.

9. Lenkradbezug (100) nach einem der vorausgehenden Ansprüche 1 bis 8, bei welchem das Band (1000) Mittel (200) aufweist, um die Befestigung an der Oberfläche des Lenkrads (1) zu erleichtern.

10. Lenkrad (1) für Motorfahrzeuge, bezogen mit einem Lenkradbezug (100) nach einem der vorausgehenden Ansprüche 1 bis 9.

## Revendications

1. Dispositif couvre-volant (100) pour véhicules automobiles, comprenant une bande flexible (1000) ayant des extrémités jointes, cette bande (1000) ayant un premier (1010) et un second (1020) bords, convenant pour couvrir la jante (10) d'un volant de direction (1) ayant au moins une branche (21;22;23;24) et comprenant au moins une partie flexible (101;102;103;104) qui fait saillie du premier bord (1010) et possède une forme prédéterminée convenable pour couvrir au moins partiellement ladite au moins une branche (21;22;23;24), **caractérisé en ce qu'**il comprend en outre au moins un insert (300;400) convenant pour être inséré entre la bande (1000) et la jante (10) du volant (1) pour créer une protubérance sur le volant couvert (1).

2. Dispositif couvrant-volant (100) selon la revendication 1, dans lequel ladite au moins une partie saillante (101;102;103;104) a une forme courbe avec une zone centrale d'un seul tenant avec la bande (1000) et deux ailes opposées face à face distantes de la bande (1000).

3. Dispositif couvrant-volant (100) selon la revendication 2, dans lequel les deux ailes possèdent des moyens de fermeture (1050) convenant pour fermer ladite au moins une partie saillante (101;102;103;104) sur elle-même autour de l'au moins une branche (21;22;23;24).

4. Dispositif couvrant-volant (100) selon l'une quelconque des revendications 1 à 3, dans lequel lesdits premier et second bords (1010;1020) de la bande (1000) sont prédisposés pour être joints par un fil de jonction (1300).

5. Dispositif couvrant-volant (100) selon la revendication 4, dans lequel lesdits premier et second bords (1010;1020) de la bande (1000) possède des fils de garnissage (1310;1320) convenant pour créer des points de couture autour desquels est passé le fil de jonction (1300).

6. Dispositif couvrant-volant (100) selon l'une quelconque des revendications 1 à 5, dans lequel l'insert (300;400) a une forme lenticulaire et est en matériau élastomère.

7. Dispositif couvrant-volant (100) selon la revendication 4 ou 5, dans lequel les premier et second bords (1010;1020) de la bande (1000) comprennent un élargissement (60) convenant pour couvrir l'insert (300;400) lorsque les bords (1010;1020) sont joints par le fil de jonction (1300).

8. Dispositif couvrant-volant (100) selon l'une quelconque des revendications précédentes 1 à 7, dans lequel la bande (1000) comprend plusieurs parties (40;50) ayant des caractéristiques différentes l'une de l'autre.

9. Dispositif couvrant-volant (100) selon l'une quelconque des revendications précédentes 1 à 8, dans lequel la bande (1000) comprend des moyens (200) pour faciliter l'attache sur la surface du volant (1).

10. Volant de direction (1) pour véhicules automobiles, recouvert par un dispositif couvre-volant (100) selon l'une quelconque des revendications précédentes 1 à 9.
